# EUROPEAN PATENT SPECIFICATION

(11) **EP 4 376 499 B1**
(45) Date of publication and mention of the grant of the patent: **19.08.2026**
(21) Application number: 22845187.8
(22) Date of filing: 12.07.2022
(51) Int. Cl.: H04W 52/02, H04W 36/00

(54) **NODE STATE CONTROL METHOD AND APPARATUS AND RELATED DEVICE**
KNOTENSTATUSSTEUERUNGSVERFAHREN UND -VORRICHTUNG SOWIE ZUGEHÖRIGE VORRICHTUNG
PROCÉDÉ ET APPAREIL DE COMMANDE D'ÉTAT DE NOEUD ET DISPOSITIF ASSOCIÉ

(30) Priority: 19.07.2021 CN 202110815545
(43) Date of publication of application: 29.05.2024
(73) Proprietor: Vivo Mobile Communication Co., Ltd., Dongguan, Guangdong 523863 (CN)
(72) Inventor: LIU, Jinhua, Dongguan, Guangdong 523863 (CN)
(74) Representative: Winter, Brandl - Partnerschaft mbB
(86) International application number: PCT/CN2022/105178
(87) International publication number: WO 2023/001022

(56) References cited:
- EP-A1- 4 223 021
- WO-A1-2021/026704
- WO-A1-2021/026707
- US-A1- 2021 160 898
- QUALCOMM: "NR Repeaters", vol. TSG RAN, no. Electronic Meeting; 20201207 - 20201211, 30 November 2020 (2020-11-30), XP051963304, Retrieved from the Internet <URL:https://ftp.3gpp.org/tsg_ran/TSG_RAN/TSGR_90e/Docs/RP-202750.zip RP-202750 NR Repeaters Motivation.pdf> [retrieved on 20201130]
- CATT: "Views on RRC States of IAB nodes", vol. RAN WG2, no. electronic; 20200224 - 20200306, 14 February 2020 (2020-02-14), XP052356060, Retrieved from the Internet <URL:https://ftp.3gpp.org/tsg_ran/WG2_RL2/TSGR2_109_e/Docs/R2-2000895.zip R2-2000895.docx> [retrieved on 20200214]
- ERICSSON: "On the Issue of INACTIVE mode for IAB-MT", 3GPP DRAFT; R2-2004609, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200601 - 20200610, 20 May 2020 (2020-05-20), Mobile Competence Centre ; 650, route des Lucioles ; F-06921 Sophia-Antipolis Cedex ; France , XP051887152

## Description

### CROSS-REFERENCE TO RELATED APPLICATIONS

This application claims priority to Chinese Patent Application No. 202110815545.8, filed on July 19, 2021 in China.

### TECHNICAL FIELD

This application pertains to the field of communications technologies, and specifically relates to a node state control method and a communications device.

### BACKGROUND

In the communications field, some nodes may establish a wireless connection to a base station, and receive a control command from the base station. For example, an intelligent signal amplifier may establish a wireless connection to the base station, and receive a control command from the base station. The intelligent signal amplifier serves as a transponder that expands coverage of a cell and enhances strength of a wireless signal, and can expand a coverage area of and enhance strength of a useful signal.

However, when there is no service or few services within a coverage area of the intelligent signal amplifier, the intelligent signal amplifier keeps in a forwarding state, causing a large waste of power. In other words, in the prior art, a node lacks flexibility in state switching. Related art can also be found in QUALCOMM: "NR Repeaters", 3GPP DRAFT; RP-202750; document EP 4 223 021 A1; document WO 2021/026707 A1; and document US 2021/160898 A1, in which various operations of an IAB node including an MT and a DU have been discussed.

### SUMMARY

The invention is set out in the appended set of claims. Embodiments of this application provide a node state control method and apparatus and a related device, so that a problem that an existing node lacks flexibility in state switching can be resolved.

According to a first aspect, a node state control method according to claim 1 is provided.

According to a second aspect, a node state control method according to claim 9 is provided.

According to a third aspect, a communication apparatus according to claim 13 is provided.

In the embodiments of this application, a node obtains target information, where the node includes a mobile termination MT module and a radio frequency module, and the target information is used to indicate a target state of the node; and the node switches to the target state based on the target information, where the target state includes at least one of a state of the MT module and a state of the radio frequency module. The node can switch to the target state based on the target information, thereby improving flexibility of node state switching.

### BRIEF DESCRIPTION OF DRAWINGS

FIG. 1 is a structural diagram of a network system according to an embodiment of this application;
FIG. 2 is a flowchart of a node state control method according to an embodiment of this application;
FIG. 3 is a schematic diagram of a timing sequence of a discontinuous working state of an intelligent signal amplifier according to an embodiment of this application;
FIG. 4 is another flowchart of a node state control method according to an embodiment of this application;
FIG. 5 is a structural diagram of a node state control apparatus according to an embodiment of this application;
FIG. 6 is another structural diagram of a node state control apparatus according to an embodiment of this application;
FIG. 7 is a structural diagram of a communications device according to an embodiment of this application; and
FIG. 8 is a structural diagram of a network side device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the specification and the claims, "and/or" represents at least one of connected objects, and the character "/" generally represents an "or" relationship between associated objects. In this application, 'transmit' indicates signal transmission, and is not signal transmission in a narrow sense.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a New Radio (New Radio, NR) system is described below as an example, and the term NR is used in most of the descriptions, although these technologies can also be used in an application other than an application of the NR system, for example, a sixth (6^{th} Generation, 6G) communication system.

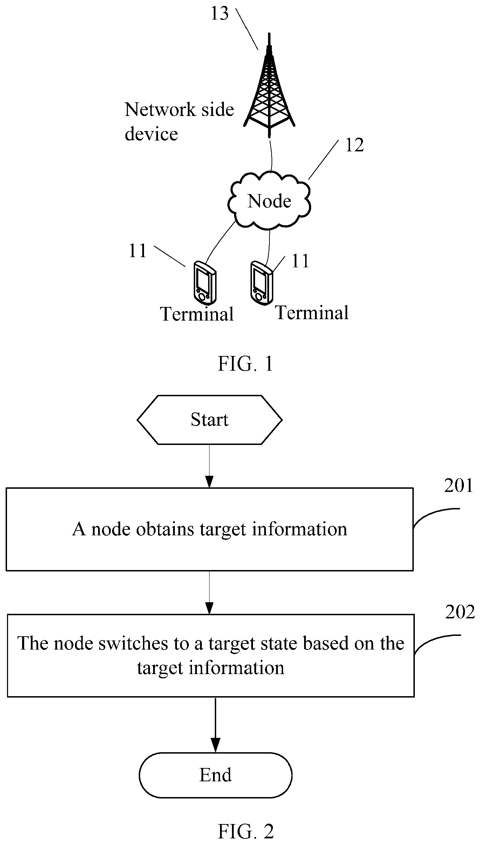

FIG. 1 is a structural diagram of a wireless communications system to which embodiments of this application can be applied. The wireless communications system includes a terminal 11, a node 12, and a network side device 13. The terminal 11 may also be referred to as a terminal device to user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (Vehicle User Equipment, VUE), or pedestrian user equipment (Pedestrian User Equipment, PUE). The wearable device includes a bracelet, a headset, and glasses. The node 12 may be an intelligent signal amplifier node or an integrated access and backhaul (Integrated access and backhaul, IAB) node. It should be noted that a specific type of the terminal 11 is not limited in the embodiments of this application. The network side device 13 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wi-Fi node, a transmitting receiving point (Transmitting Receiving Point, TRP), or another appropriate term in the art. Provided that a same technical effect is achieved, the base station is not limited to a specified technical term. It should be noted that, in the embodiments of this application, only a base station in an NR system is used as an example, but a specific type of the base station is not limited.

A node state control method provided in the embodiments of this application will be described in detail below by using specific embodiments and application scenarios with reference to the accompanying drawings.

FIG. 2 is a flowchart of a node state control method according to an embodiment of this application. The node state control method includes the following steps:
Step 201: A node obtains target information, where the node includes a mobile termination (Mobile Termination, MT) module and a radio frequency module.

The node may be an intelligent signal amplifier node (referred to as an intelligent signal amplifier for short below) or an integrated access and backhaul (Integrated Access and Backhaul, IAB) node.

The intelligent signal amplifier includes the MT module and the radio frequency module. The MT module may also be referred to as an MT function or an MT function module. The radio frequency module may also be referred to as a radio frequency function module, a radio frequency (Radio Frequency, RF) module, or a radio unit (Radio Unit, RU) module. The MT module is configured to establish a connection to a network side device, and the network side device may be a base station. It should be noted that the network side device is not limited to the base station. In this application, the base station is used as an example for description, but this does not constitute a limitation on the network side device. The base station interacts with the intelligent signal amplifier by using the MT module, to configure a sending parameter of the intelligent signal amplifier.

For the IAB node, the radio frequency module may also be referred to as a distributed unit (Distributed Unit, DU) function, and the IAB node includes an MT function and a DU function. The DU function enables the IAB node to provide a wireless access function for a child node or user equipment (User Equipment, UE) like a base station, and the MT function enables the IAB node to be controlled and scheduled by a parent node like the UE.

Step 202: The node switches to a target state based on the target information, where the target state includes at least one of a state of the MT module and a state of the radio frequency module.

The target information may be indication information sent by the network side device, or may be a predefined parameter or a preconfigured parameter. There are two manners of triggering node switching: One manner is that the node is indicated based on indication information sent by the base station to switch a state, and the other manner is that the node performs autonomous state switching based on at least one of the predefined parameter and the preconfigured parameter. In other words, the target information may include at least one of the following:
indication information sent by the network side device;
a predefined parameter; and
a preconfigured parameter.

In the foregoing descriptions, the node may switch a state of the node to the target state based on the target information. For example, if the node is not scheduled for forwarding in a preset time period, the state of the node may be switched to a fully-off state, a partially-on state, a partial working state, or a discontinuous working state, to reduce power consumption.

For example, when the intelligent signal amplifier works, the intelligent signal amplifier amplifies an interference signal from a neighboring cell that interferes with UE and a base station of a current cell, and sends a secondary lobe from the current cell to the neighboring cell to interfere with UE and a base station of the neighboring cell. If there is no service or few services in a coverage area of the intelligent signal amplifier, the intelligent signal amplifier may be in an off state or a partially off state, thereby effectively reducing interference caused by the intelligent signal amplifier and reducing power consumption of the intelligent signal amplifier. When the intelligent signal amplifier needs to work, the intelligent signal amplifier is switched to a fully-open state through state switching.

In this embodiment, the node obtains the target information, where the node includes the MT module and the radio frequency module; and the node switches to the target state based on the target information, where the target state includes at least one of the state of the MT module and the state of the radio frequency module. The node can switch a state of the node based on the target information, thereby improving flexibility of node state switching.

In the foregoing descriptions, the target information is indicated by using Radio Resource Control (Radio Resource Control, RRC) signaling, Media Access Control (Media Access Control, MAC) control element (Control Element, CE) signaling, signaling carried by a physical downlink control channel (Physical Downlink Control Channel, PDCCH), or a backhaul adaptation protocol (Backhaul Adaptation Protocol, BAP) control protocol data unit (Protocol Data Unit, PDU).

In this application, an intelligent signal amplifier is used as an example for description. It should be noted that, an implementation applicable to the intelligent signal amplifier is also applicable to the IAB node.

The target state includes a fully-on state, a fully-off state, a partially-on state, a partial working state, or a discontinuous working state. In a case that both the MT module and the RF module are in an on state, the state of the node is a fully-on state.

When the node is in a fully-off state, both the MT module and the RF module are in an off state. In this state, there may be the following three sub-states. When releasing a connection to the intelligent signal amplifier, a serving base station may indicate, in a release message, that the intelligent signal amplifier is in one of the following states after releasing the connection:
the MT module is in an idle state (that is, an RRC_IDLE state), and the RF module is in an off state;
the MT module is in an inactive state (that is, an RRC_INACTIVE state), and the RF module is in an off state; and
the MT module is in an inactive state (that is, an RRC_INACTIVE state), and the RF module is in an inactive state (off but reserved with context information).

The partially-on state of the node includes one of the following:
the MT module is in an on state, and the RF module is in an off state or a sleeping state;
the MT module is in a discontinuous reception (Discontinuous Reception, DRX) state, and the RF module is in an off state or a sleeping state; and
the MT module is in a light sleeping state and detects only a wake up signal (Wake up signal), and the RF module is in an off state.

In the partially-on state, the RF module is in an off state, so that power consumption can be reduced and power can be saved.

The partial working state includes one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

It should be noted that, when the node is in the partial working state, the MT module may be in an idle state, an inactive state, an on state, a DRX state, or a light sleeping state.

For example, the RF module works in an uplink slot and is in an off state in a downlink slot; and the RF module is enabled in an uplink slot and a downlink slot to work, and is in an off state in some unavailable slots. For example, when the intelligent signal amplifier is controlled by the IAB node, and some slots of a DU function of the IAB node are unavailable slots, the RF module and/or the MT module of the intelligent signal amplifier may be configured to be in an off state in the unavailable slots.

The discontinuous working state of the node includes:
the MT module is in a DRX state, and the radio frequency module is in a discontinuous working state, where the discontinuous working state of the radio frequency module includes at least one of a discontinuous working state for uplink forwarding and a discontinuous working state for downlink forwarding.

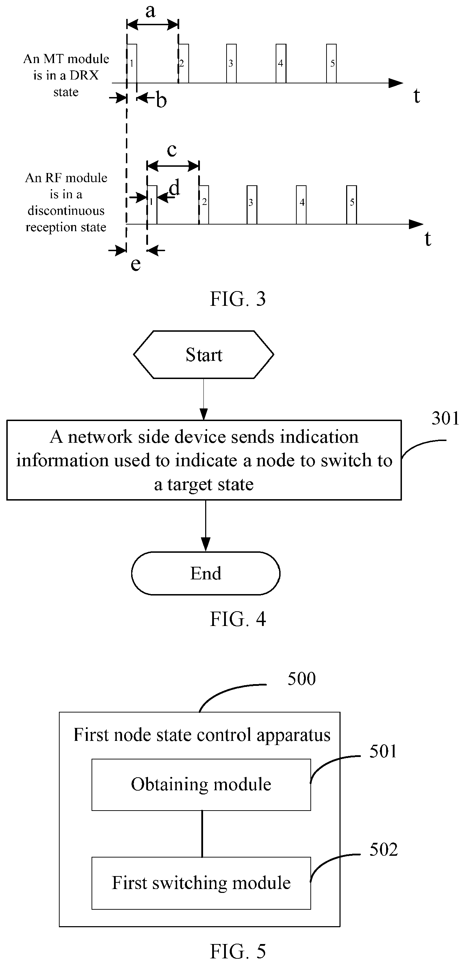

FIG. 3 shows an example of the discontinuous working state of the intelligent signal amplifier. As shown in FIG. 3, the MT module is in a DRX state, that is, the MT module is in a discontinuous reception state. A symbol a indicates a DRX cycle, a symbol b indicates on-duration (on-duration) in which the MT module in a DRX state, a symbol c indicates an operation cycle (operation cycle) of a discontinuous working state of the RF module, a symbol d indicates on-duration in which the RF module is in a discontinuous working state, and a symbol e indicates a time offset (time offset). That the radio frequency module is in a discontinuous working state may be understood as that data forwarding of the radio frequency module is discontinuous.

The MT module detects a scheduling indicator from the base station for the RF module in on-duration of the MT module, and the RF module is also in a corresponding discontinuous working state. A cycle and an offset in which the RF module is in an on state match a cycle and an offset of the MT module. For example, in FIG. 3, on-duration 1 of the MT module matches (or may be referred to as "corresponds to") on-duration 1 of the RF module, on-duration 2 of the MT module matches on-duration 2 of the RF module, and so on.

Optionally, because there is a detection delay when the MT module detects an indicator from the base station, an offset time (time offset ≥0) may be configured between start time of the on-duration of the RF module and start time of the on-duration of the MT module. In other words, start time from which the radio frequency module in an on state may be obtained by offsetting preset time from start time from which the MT module in an on state. The preset time is greater than or equal to 0. When the preset time is equal to 0, the start time from which the radio frequency module in an on state is the same as the start time from which the MT module in an on state.

In the on-duration of the discontinuous working state of the RF module, the RF module may be in a discontinuous working state for uplink forwarding, a discontinuous working state for downlink forwarding, or a discontinuous working state for hybrid forwarding. The discontinuous working state for hybrid forwarding includes the discontinuous working state for uplink forwarding and the discontinuous working state for downlink forwarding.

The discontinuous working state of the radio frequency module is configured based on a slot bitmap or a symbol bitmap sent by the network side device. The slot bitmap or the symbol bitmap is indicated by using RRC signaling, MAC CE signaling, or signaling carried by a PDCCH. In other words, the base station may configure an on/off state of the RF module on a slot or a symbol by using the slot bitmap or the symbol bitmap indicated by RRC signaling, MAC CE signaling, or signaling carried by a PDCCH.

There are two manners of triggering node switching: One manner is that the node is indicated based on indication information sent by the base station to switch a state. For example, the base station may explicitly indicate, by using RRC signaling, MAC CE signaling, or signaling carried by a PDCCH, switching of a working state of the intelligent signal amplifier. For the IAB node, a BAP control PDU may also be used for implementation. The other manner for triggering switching is as follows: The node performs autonomous switching based on at least one of a predefined parameter and a preconfigured parameter.

For example, after the node is scheduled for forwarding by the base station last time, the node is not scheduled for forwarding again in a first preset time period, the node switches to the state described in the first or the second item of the partially-on state based on the target information, that is, switches to one of the following states:
the MT module is in an on state, and the radio frequency module is in an off state or a sleeping state; and
the MT module is in a DRX state, and the radio frequency module is in an off state or a sleeping state.

The first preset time period is a time period that uses time at which the node is scheduled for forwarding last time as start time and whose duration is first preset duration.

Then, if the node is not scheduled for forwarding in a second preset time period, the node switches to the state described the third item in the foregoing partially-on state based on the target information, that is, the node switches to the following state:
the MT module is in a light sleeping state, and the radio frequency module is in an off state.

The second preset time period may be a time period that uses end time of the first preset time period as start time and whose duration is second preset duration.

In a case that the node is in a partially-on state, if an indicator for scheduling for forwarding is received, the node exits the partially-on state to a preset working state, for example, a fully working state or a partial working state, that is, the node switches to the following state based on the target information:
the MT module is in an on state, and the radio frequency module is in an on state;
   or
the radio frequency module is in an on state in an uplink slot and/or an uplink symbol, and is in an off state or a sleeping state in a downlink slot and/or a downlink symbol; or
the radio frequency module is in an off state or a sleeping state in the uplink slot and/or the uplink symbol, and is in an on state in the downlink slot and/or the downlink symbol;
   or
the radio frequency module is in an on state in the uplink slot and/or the uplink symbol, is in an on state in the downlink slot and/or the downlink symbol, and is in an off state or a sleeping state in an unavailable slot.

A parameter of the partial working state is preconfigured by the base station, for example, a DRX state parameter of the MT module described in the second item in the partially-on state and a PDCCH (a wake-up signal (Wake-Up Signal, WUS)) format and a monitoring window described in the third item in the partially-on state. State switching may be indicated by using dynamic signaling, for example, by using information carried by a PDCCH and a MAC CE.

In an embodiment of this application, when the intelligent signal amplifier does not need to continue to work, the base station may release the intelligent signal amplifier to an inactive state. In this case, both the MT module and the RF module are in an off state (that is, the node is in a fully-off state), and the intelligent signal amplifier and the base station reserve context of the MT module and context of the RF module.

In the foregoing descriptions, in addition to reserving some parameters that are the same as those of common UE, for example, radio bearer configuration, bandwidth part (Bandwidth part, BWP) configuration, and power control configuration, the context of the MT module further has physical channel configuration used for transmitting signaling for controlling the RF module, such as a corresponding PDCCH format and a physical resource, and a radio network temporary identifier (Radio Network Temporary Identifier, RNTI) that matches the PDCCH, for example, uplink and downlink forwarding power or an amplification multiple for controlling the RF module, or a related parameter for controlling beam transmission/receiving between the RF module and the UE. In other words, the context of the MT module includes at least one of the following:
a PDCCH format and a physical resource that are used to transmit signaling; and
a radio network temporary identifier RNTI used for transmitting the PDCCH.

The context of the RF module includes at least one of the following:
maximum uplink forwarding power or an amplification multiple;
synchronization signal block (Synchronization Signal Block, SSB) parameter configuration;
channel state information reference signal (CSI reference signals, CSI-RS) parameter configuration;
configuration of a beam parameter broadcast and forwarded by using a system signal;
configuration of power broadcast and forwarded by using a system signal;
configuration of a parameter forwarded by using a physical random access channel (Physical Random-Access Channel, PRACH);
configuration of an uplink/downlink slot or symbol; and
configuration of a parameter related to the partially-on state.

After the intelligent signal amplifier establishes a connection to the base station in an inactive state, and receives no reconfiguration of a related parameter, the intelligent signal amplifier automatically performs subsequent state switching based on stored related parameter configuration (that is, the context of the MT module and the context of the RF module).

In an embodiment of this application, the target information includes a radio access network (Radio Access Network, RAN) side paging signal based on an inactive radio network temporary identifier (Inactive Radio Network Temporary Identifier, I-RNTI) sent by a network side device.

The switching, by the node, to the target state based on the target information includes:
establishing, by the node, a wireless connection to the network side device; and
switching, by the node, the radio frequency module to an on state.

For example, the base station may configure an I-RNTI-based paging signal on a RAN side for the MT module, and the paging signal is monitored by an intelligent signal amplifier in a fully-on state. After receiving the paging signal, the MT module establishes a wireless connection to the base station, and enables the RF module to work, that is, switches the RF module to an on state.

In another embodiment of this application, the target information includes information that is sent by the network side device and that is used to indicate a switching time point.

The switching, by the node, to the target state based on the target information includes:
in a case that current time of the node is the switching time point, establishing, by the node, a wireless connection to the network side device; and
switching, by the node, the radio frequency module to an on state.

For example, when releasing the intelligent signal amplifier, the base station configures a next time point at which the intelligent signal amplifier establishes a connection to the base station and enters a working state, that is, the switching time point. The intelligent signal amplifier autonomously performs timing, and when the switching time point arrives, the intelligent signal amplifier initiates a random access process to establish a connection to the base station, and enables the RF module to the working state, that is, switches the RF module to an on state.

FIG. 4 is a flowchart of a node state control method according to an embodiment of this application. As shown in FIG. 4, the node state control method provided in this embodiment of this application includes the following steps.

Step 301: A network side device sends indication information used to indicate a node to switch to a target state, where the node includes an MT module and a radio frequency module, and the target state includes at least one of a state of the MT module and a state of the radio frequency module.

The node may be an intelligent signal amplifier node (referred to as an intelligent signal amplifier for short below) or an IAB node.

The intelligent signal amplifier includes an MT module and a radio frequency (Radio Frequency, RF) module. The MT module is configured to establish a connection to the base station. The base station interacts with the intelligent signal amplifier by using the MT module, to configure a sending parameter of the intelligent signal amplifier. The MT module may also be referred to as an MT function module or an MT function.

For the IAB node, the radio frequency module may also be referred to as a distributed unit (Distributed Unit, DU) function, and the IAB node includes an MT function and a DU function. The DU function enables the IAB node to provide a wireless access function for a child node or user equipment (User Equipment, UE) like a base station, and the MT function enables the IAB node to be controlled and scheduled by a parent node like the UE.

In the foregoing descriptions, the node may switch a state of the node based on the indication information. For example, the node is not scheduled for forwarding in a preset time period, and may switch the state of the node to a fully-off state, a partially-on state, a partial working state, or a discontinuous working state, to reduce power consumption.

For example, when the intelligent signal amplifier works, the intelligent signal amplifier amplifies an interference signal from a neighboring cell that interferes with UE and a base station of a current cell, and sends a secondary lobe from the current cell to the neighboring cell to interfere with UE and a base station of the neighboring cell. If there is no service or few services in a coverage area of the intelligent signal amplifier, the intelligent signal amplifier may be in an off state or a partially off state, thereby effectively reducing interference caused by the intelligent signal amplifier and reducing power consumption of the intelligent signal amplifier. When the intelligent signal amplifier needs to work, the intelligent signal amplifier is switched to a fully-open state through state switching.

In this embodiment, the network side device sends the indication information used to indicate the node to switch to the target state, where the node includes the MT module and the radio frequency module, and the target state includes at least one of the state of the MT module and the state of the radio frequency module. The node can switch the state of the node based on indication information, thereby improving flexibility of node state switching.

In the foregoing descriptions, the indication information is indicated by Radio Resource Control RRC signaling, Media Access Control MAC control element CE signaling, signaling carried by a physical downlink control channel PDCCH, or a BAP control protocol data unit PDU.

The target state includes a fully-on state, a fully-off state, a partially-on state, a partial working state, or a discontinuous working state. In a case that both the MT module and the RF module are in an on state, the state of the node is a fully-on state.

When the node is in a fully-off state, both the MT module and the RF module are in an off state. In this state, there may be the following three sub-states. When releasing a connection to the intelligent signal amplifier, a serving base station may indicate, in a release message, that the intelligent signal amplifier is in one of the following states after releasing the connection:
the MT module is in an idle state (that is, an RRC_IDLE state), and the RF module is in an off state;
the MT module is in an inactive state (that is, an RRC_INACTIVE state), and the RF module is in an off state; and
the MT module is in an inactive state (that is, an RRC_INACTIVE state), and the RF module is in an inactive state (off but reserved with context information).

The partially-on state of the node includes one of the following:
the MT module is in an on state, and the RF module is in an off state or a sleeping state;
the MT module is in a discontinuous reception (Discontinuous Reception, DRX) state, and the RF module is in an off state or a sleeping state; and
the MT module is in a light sleeping state and detects only a wake up signal (Wake up signal), and the RF module is in an off state.

In the partially-on state, the RF module is in an off state, so that power consumption can be reduced and power can be saved.

The partial working state includes one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

For example, the RF module works in an uplink slot and is in an off state in a downlink slot; and the RF module is enabled in an uplink slot and a downlink slot to work, and is in an off state in some unavailable slots. For example, when the intelligent signal amplifier is controlled by the IAB node, and some slots of a DU function of the IAB node are unavailable slots, the RF module and/or the MT module of the intelligent signal amplifier may be configured to be in an off state in the unavailable slots.

The discontinuous working state includes:
the MT module is in a DRX state, and the radio frequency module is in a discontinuous working state, where the discontinuous working state of the radio frequency module includes at least one of a discontinuous working state for uplink forwarding and a discontinuous working state for downlink forwarding.

Start time from which the radio frequency module in an on state may be obtained by offsetting preset time from start time from which the MT module in an on state. The preset time is greater than or equal to 0. When the preset time is equal to 0, the start time from which the radio frequency module in an on state is the same as the start time from which the MT module in an on state.

The discontinuous working state of the radio frequency module is configured based on a slot bitmap or a symbol bitmap sent by a network side device. The slot bitmap or the symbol bitmap is indicated by using RRC signaling, MAC CE signaling, or signaling carried by a PDCCH.

In the fully-off state, the network side device reserves context of the MT module and context of the radio frequency module.

The context of the MT module includes at least one of the following:
a PDCCH format and a physical resource that are used to transmit signaling; and
a radio network temporary identifier RNTI used for transmitting the PDCCH.

The context of the radio frequency module includes at least one of the following:
maximum uplink forwarding power or an amplification multiple;
configuration of a synchronization signal block SSB parameter;
configuration of a channel state information reference signal CSI-RS parameter;
configuration of a beam parameter broadcast and forwarded by using a system signal;
configuration of power broadcast and forwarded by using a system signal;
configuration of a parameter forwarded by using a physical random access channel PRACH;
configuration of an uplink/downlink slot or symbol; and
configuration of a parameter related to the partially-on state.

The indication information includes a radio access network paging signal on a RAN side based on an inactive radio network temporary identifier I-RNTI; or

Information used to indicate a switching time point.

Specifically, the node may establish a wireless connection to the network side device based on the received I-RNTI-based paging signal on a RAN side, and the node switches the radio frequency module to an on state; or the node may establish a wireless connection to the network side device based on received information used to indicate the switching time point, and switch the radio frequency module to an on state in a case that current time of the node is the switching time point.

It should be noted that the node state control method provided in the foregoing embodiments of this application may be performed by a node state control apparatus or a control module that is in the node state control apparatus and that is configured to perform the node state control method.

In the following embodiment, a node state control apparatus performs the node state control method is used as an example to describe the node state control apparatus provided in the embodiments of this application.

FIG. 5 is a structural diagram of a node state control apparatus according to an embodiment of this application. A first node state control apparatus 500 includes:
an obtaining module 501, configured to obtain target information, where the target information is used to indicate a target state of a node; and
a first switching module 502, configured to switch to the target state based on the target information, where the node includes an MT module and a radio frequency module, and the target state includes at least one of a state of the MT module and a state of the radio frequency module.

Optionally, the target information includes at least one of the following:
indication information sent by the network side device;
a predefined parameter; and
a preconfigured parameter.

Optionally, the target information is indicated by Radio Resource Control RRC signaling, Media Access Control MAC control element CE signaling, signaling carried by a physical downlink control channel PDCCH, or a BAP control protocol data unit PDU.

Optionally, the target state includes a fully-on state, a fully-off state, a partially-on state, a partial working state, or a discontinuous working state.

Optionally, the fully-off state includes one of the following:
the MT module is in an idle state, and the radio frequency module is in an off state;
the MT module is in an inactive state, and the radio frequency module is in an off state; and
the MT module is in an inactive state, and the radio frequency module is in an inactive state.

Optionally, the partially-on state includes one of the following:
the MT module is in an on state, and the radio frequency module is in an off state or a sleeping state;
the MT module is in a discontinuous reception DRX state, and the radio frequency module is in an off state or a sleeping state; and
the MT module is in a light sleeping state, and the radio frequency module is in an off state.

Optionally, the partial working state includes one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

The discontinuous working state includes:
the MT module is in a DRX state, and the radio frequency module is in a discontinuous working state, where the discontinuous working state of the radio frequency module includes at least one of a discontinuous working state for uplink forwarding and a discontinuous working state for downlink forwarding.

Optionally, start time at which the radio frequency module in an on state is determined based on the following:
start time at which the MT module in an on state is offset by preset time.

The discontinuous working state of the radio frequency module is configured based on a slot bitmap or a symbol bitmap sent by a network side device.

Optionally, the slot bitmap or the symbol bitmap is indicated by using RRC signaling, MAC CE signaling, or signaling carried by a PDCCH.

Optionally, the first switching module 502 is configured to: in a case that the node is not scheduled for forwarding in a first preset time period, switch to one of the following states based on the target information:
the MT module is in an on state, and the radio frequency module is in an off state or a sleeping state; and
the MT module is in a DRX state, and the radio frequency module is in an off state or a sleeping state.

Optionally, the apparatus further includes a second switching module, configured to:
in a case that the node is not scheduled for forwarding in a second preset time period, switch to the following state based on the target information:
the MT module is in a light sleeping state, and the radio frequency module is in an off state.

Optionally, the first switching module is configured to: in a case that the node is in a partially-on state and the node is scheduled for forwarding, switch to the following state based on the target information:
the MT module is in an on state, and the radio frequency module is in an on state;
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; or
the radio frequency module is in an on state in the uplink slot and/or the uplink symbol, is in an on state in the downlink slot and/or the downlink symbol, and is in an off state or a sleeping state in an unavailable slot.

Optionally, in the fully-off state, the node reserves context of the MT module and context of the radio frequency module.

Optionally, the context of the MT module includes at least one of the following:
a PDCCH format and a physical resource that are used to transmit signaling; and
a radio network temporary identifier RNTI used for transmitting a PDCCH;

Optionally, the context of the radio frequency module includes at least one of the following:
maximum uplink forwarding power or an amplification multiple;
configuration of a synchronization signal block SSB parameter;
configuration of a channel state information-reference signal CSI-RS parameter;
configuration of a beam parameter broadcast and forwarded by using a system signal;
configuration of power broadcast and forwarded by using a system signal;
configuration of a parameter forwarded by using a physical random access channel PRACH;
configuration of an uplink/downlink slot or symbol; and
configuration of a parameter related to the partially-on state.

Optionally, the target information includes a paging signal on a radio access network RAN side based on an inactive radio network temporary identifier I-RNTI sent by a network side device.

The first switching module 502 is configured to: establish a wireless connection to the network side device, and switch the radio frequency module to an on state.

Optionally, the target information includes information that is sent by a network side device and that is used to indicate a switching time point.

The first switching module 502 is configured to: in a case that current time of the node is the switching time point, establish a wireless connection to the network side device; and switch the radio frequency module to an on state.

Optionally, the node is an intelligent signal amplifier node or an integrated access and backhaul IAB node.

The first node state control apparatus 500 in this embodiment of this application may be an apparatus, or may be a component, an integrated circuit, or a chip in a terminal.

The first node state control apparatus 500 in this embodiment of this application may be an apparatus with an operating system. The operating system may be an Android (Android) operating system, an iOS operating system, or another possible operating system. This is not specifically limited in this embodiment of this application.

The first node state control apparatus 500 provided in this embodiment of this application can implement the processes of the method embodiment of FIG. 2, and a same technical effect is achieved. To avoid repetition, details are not provided herein again.

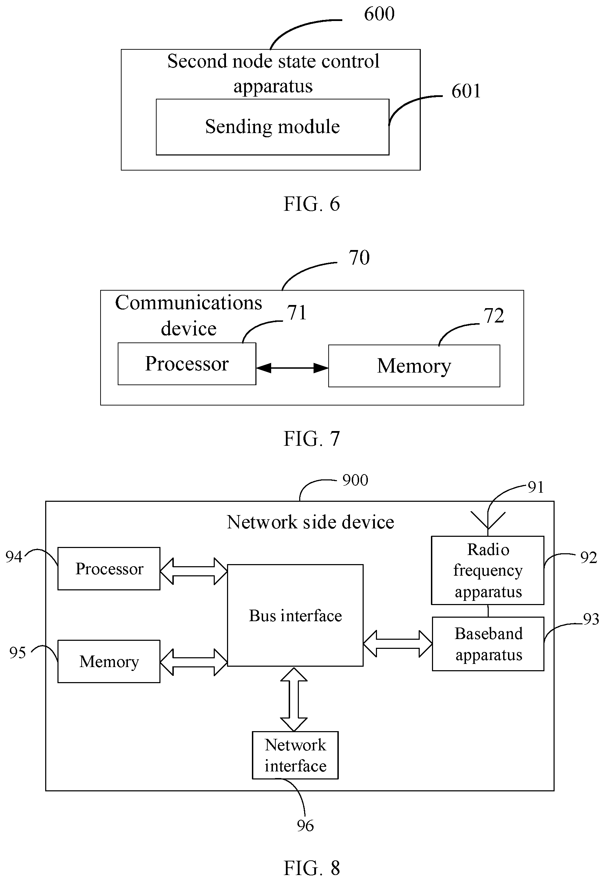

FIG. 6 is a structural diagram of a node state control apparatus according to an embodiment of this application. A second node state control apparatus 600 includes:
a sending module 601, configured to send indication information used to indicate a node to switch to a target state, where the node includes an MT module and a radio frequency module, and the target state includes at least one of a state of the MT module and a state of the radio frequency module.

Optionally, the indication information is indicated by Radio Resource Control RRC signaling, Media Access Control MAC control element CE signaling, signaling carried by a physical downlink control channel PDCCH, or a BAP control protocol data unit PDU.

Optionally, the target state includes a fully-on state, a fully-off state, a partially-on state, a partial working state, or a discontinuous working state.

Optionally, the fully-off state includes one of the following:
the MT module is in an idle state, and the radio frequency module is in an off state;
the MT module is in an inactive state, and the radio frequency module is in an off state; and
the MT module is in an inactive state, and the radio frequency module is in an inactive state.

Optionally, the partially-on state includes one of the following:
the MT module is in an on state, and the radio frequency module is in an off state or a sleeping state;
the MT module is in a discontinuous reception DRX state, and the radio frequency module is in an off state or a sleeping state; and
the MT module is in a light sleeping state, and the radio frequency module is in an off state.

Optionally, the partial working state includes one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

The discontinuous working state includes:
the MT module is in a DRX state, and the radio frequency module is in a discontinuous working state, where the discontinuous working state of the radio frequency module includes at least one of a discontinuous working state for uplink forwarding and a discontinuous working state for downlink forwarding.

Optionally, start time at which the radio frequency module in an on state is determined based on the following:
start time at which the MT module in an on state is offset by preset time.

The discontinuous working state of the radio frequency module is configured based on a slot bitmap or a symbol bitmap sent by a network side device.

Optionally, the slot bitmap or the symbol bitmap is indicated by using RRC signaling, MAC CE signaling, or signaling carried by a PDCCH.

Optionally, in the fully-off state, the network side device reserves context of the MT module and context of the radio frequency module.

Optionally, the context of the MT module includes at least one of the following:
a PDCCH format and a physical resource that are used to transmit signaling; and
a radio network temporary identifier RNTI used for transmitting a PDCCH;

Optionally, the context of the radio frequency module includes at least one of the following:
maximum uplink forwarding power or an amplification multiple;
configuration of a synchronization signal block SSB parameter;
configuration of a channel state information-reference signal CSI-RS parameter;
configuration of a beam parameter broadcast and forwarded by using a system signal;
configuration of power broadcast and forwarded by using a system signal;
configuration of a parameter forwarded by using a physical random access channel PRACH;
configuration of an uplink/downlink slot or symbol; and
configuration of a parameter related to the partially-on state.

Optionally, the indication information includes a paging signal on a radio access network RAN side based on an inactive radio network temporary identifier I-RNTI;
or
information used to indicate a switching time point.

Optionally, the node is an intelligent signal amplifier node or an integrated access and backhaul IAB node.

The second node state control apparatus 600 provided in this embodiment of this application can implement the processes of the method embodiment of FIG. 4, and a same technical effect is achieved. To avoid repetition, details are not provided herein again.

Optionally, as shown in FIG. 7, an embodiment of this application further provides a communications device 70, including a processor 71, a memory 72, and a program or an instruction that is stored in the memory 72 and that can be run on the processor 71. For example, in a case that the communications device 70 is a terminal, when the program or the instruction is executed by the processor 71, the processes of the foregoing embodiment of the node state control method in FIG. 2 are implemented, and same technical effect can be achieved; and in a case that the communications device 70 is a network side device, when the program or the instruction is executed by the processor 71, the processes of the foregoing embodiment of the node state control method in FIG. 4 are implemented, and a same technical effect can be achieved.

An embodiment of this application further provides a network side device. As shown in FIG. 8, a network side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and sends processed information by using the antenna 91.

The frequency band processing apparatus may be located in the baseband apparatus 93. The method performed by the network side device in the foregoing embodiment may be implemented in the baseband apparatus 93. The baseband apparatus 93 includes a processor 94 and a memory 95.

The baseband apparatus 93 may include, for example, at least one baseband board, where a plurality of chips are disposed on the baseband board. As shown in FIG. 8, one chip is, for example, the processor 94, and is connected to the memory 95, so as to invoke a program in the memory 95 to perform operations of the network device shown in the foregoing method embodiments.

The baseband apparatus 93 may further include a network interface 96, configured to exchange information with the radio frequency apparatus 92. For example, the interface is a common public radio interface (common public radio interface, CPRI).

Specifically, the network side device in this embodiment of the present invention further includes an instruction or a program that is stored in the memory 95 and that can be run on the processor 94. The processor 94 invokes the instruction or the program in the memory 95 to perform the method performed by the modules shown in FIG. 6, and a same technical effect is achieved. To avoid repetition, details are not described herein again.

An embodiment of this application further provides a readable storage medium. The readable storage medium may be non-volatile or volatile. The readable storage medium stores a program or an instruction, and the program or the instruction is executed by a processor to implement the processes of the foregoing method embodiment in FIG. 2 or FIG. 4, and a same technical effect can be achieved. To avoid repetition, details are not described herein again.

The processor is a processor in the terminal or the network side device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor, and when the processor is configured to run a program or an instruction of a network side device, so that the processes of the method embodiment in FIG. 2 or FIG. 4 are implemented, and a same technical effect is achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-transitory readable storage medium, and the computer program product is executed by at least one processor to implement the processes of the foregoing method embodiment in FIG. 2 or FIG. 4, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A node state control method comprising:
obtaining (201), by a node, target information, wherein the node comprises a mobile termination, MT, module and a radio frequency module, and the target information is used to indicate a target state of the node; and
switching (202), by the node, to the target state based on the target information, wherein the target state comprises at least one of a state of the MT module and a state of the radio frequency module,
wherein the target state comprises a discontinuous working state,
**characterized in that** the discontinuous working state comprises: the MT module is in a DRX state, and the radio frequency module is in a discontinuous working state, wherein the discontinuous working state of the radio frequency module comprises at least one of a discontinuous working state for uplink forwarding and a discontinuous working state for downlink forwarding, and the discontinuous working state of the radio frequency module is configured based on a slot bitmap or a symbol bitmap sent by a network side device.

2. The method according to claim 1, wherein the target state further comprises a fully-on state, a fully-off state, a partially-on state, or a partial working state.

3. The method according to claim 2, wherein the fully-off state comprises one of the following:
the MT module is in an idle state, and the radio frequency module is in an off state;
the MT module is in an inactive state, and the radio frequency module is in an off state; and
the MT module is in an inactive state, and the radio frequency module is in an inactive state;
or
wherein the partially-on state comprises one of the following:
the MT module is in an on state, and the radio frequency module is in an off state or a sleeping state;
the MT module is in a discontinuous reception, DRX, state, and the radio frequency module is in an off state or a sleeping state; and
the MT module is in a light sleeping state, and the radio frequency module is in an off state;
or
wherein the partial working state comprises one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

4. The method according to claim 1, wherein the switching (202), by the node, to the target state based on the target information comprises:
in a case that the node is not scheduled for forwarding in a first preset time period, switching, by the node, to one of the following states based on the target information:
the MT module is in an on state, and the radio frequency module is in an off state or a sleeping state; and
the MT module is in a DRX state, and the radio frequency module is in an off state or a sleeping state.

5. The method according to claim 4, wherein after the switching (202), by the node, to the target state based on the target information, the method further comprises:
in a case that the node is not scheduled for forwarding in a second preset time period, switching, by the node, to the following state based on the target information:
the MT module is in a light sleeping state, and the radio frequency module is in an off state.

6. The method according to claim 1, wherein the she switching (202), by the node, to the target state based on the target information comprises:
in a case that the node is in a partially-on state and the node is scheduled for forwarding, switching, by the node, to the following state based on the target information:
the MT module is in an on state, and the radio frequency module is in an on state;
or
the radio frequency module is in an on state in an uplink slot and/or an uplink symbol, and is in an off state or a sleeping state in a downlink slot and/or a downlink symbol;
or
the radio frequency module is in an off state or a sleeping state in the uplink slot and/or the uplink symbol, and is in an on state in the downlink slot and/or the downlink symbol;
or
the radio frequency module is in an on state in the uplink slot and/or the uplink symbol, is in an on state in the downlink slot and/or the downlink symbol, and is in an off state or a sleeping state in an unavailable slot.

7. The method according to claim 2, wherein the node reserves context of the MT module and context of the radio frequency module in the fully-off state;
wherein the context of the MT module comprises at least one of the following:
a physical channel configuration between the MT module and a base station, wherein the physical channel configuration is used to transmit signaling used to control the radio frequency module, and the physical channel configuration comprises a physical downlink control channel, PDCCH, format and a physical resource;
a wireless network temporary identity, RNTI, that matches a PDCCH, wherein the PDCCH is used to transmit signaling used to control the radio frequency module;
uplink/downlink forwarding power or an amplification multiple for controlling the radio frequency module; and
a related parameter for controlling beam receiving/transmitting between the radio frequency module and UE;
and/or
the context of the radio frequency module comprises at least one of the following:
maximum uplink forwarding power or an amplification multiple;
configuration of a synchronization signal block, SSB, parameter;
configuration of a channel state information-reference signal, CSI-RS, parameter;
configuration of a beam parameter broadcast and forwarded by using a system signal;
configuration of power broadcast and forwarded by using a system signal;
configuration of a parameter forwarded by using a physical random access channel, PRACH;
configuration of an uplink/downlink slot or symbol; and
configuration of a parameter related to the partially-on state.

8. The method according to claim 1, wherein the target information comprises an inactive radio network temporary identifier, I-RNTI, -based paging signal on a radio access network, RAN, side that is sent by a network side device; and
the switching (202), by the node, to the target state based on the target information comprises:
establishing, by the node, a wireless connection to the network side device; and
switching, by the node, the radio frequency module to an on state;
or
wherein the target information comprises information that is sent by a network side device and that is used to indicate a switching time point; and
the switching (202), by the node, to the target state based on the target information comprises:
in a case that current time of the node is the switching time point, establishing, by the node, a wireless connection to the network side device; and
switching, by the node, the radio frequency module to an on state.

9. A node state control method comprising:
sending (301), by a network side device, indication information used to indicate a node to switch to a target state, wherein the node comprises a mobile termination MT module and a radio frequency module, and the target state comprises at least one of a state of the MT module and a state of the radio frequency module,
wherein the target state comprises a discontinuous working state,
**characterized in that** the discontinuous working state comprises: the MT module is in a DRX state, and the radio frequency module is in a discontinuous working state, wherein the discontinuous working state of the radio frequency module comprises at least one of a discontinuous working state for uplink forwarding and a discontinuous working state for downlink forwarding, and the discontinuous working state of the radio frequency module is configured based on a slot bitmap or a symbol bitmap sent by a network side device.

10. The method of claim 9, wherein the target state further comprises a fully-on state, a fully-off state, a partially-on state, or a partial working state, or a discontinuous working state.

11. The method according to claim 10, wherein the fully-off state comprises one of the following:
the MT module is in an idle state, and the radio frequency module is in an off state;
the MT module is in an inactive state, and the radio frequency module is in an off state; and
the MT module is in an inactive state, and the radio frequency module is in an inactive state;
or
wherein the partially-on state comprises one of the following:
the MT module is in an on state, and the radio frequency module is in an off state or a sleeping state;
the MT module is in a discontinuous reception DRX state, and the radio frequency module is in an off state or a sleeping state; and
the MT module is in a light sleeping state, and the radio frequency module is in an off state;
or
wherein the partial working state comprises one of the following:
the radio frequency module is in an on state in an uplink slot and/or an uplink symbol, and is in an off state or a sleeping state in a downlink slot and/or a downlink symbol;
the radio frequency module is in an off state or a sleeping state in the uplink slot and/or the uplink symbol, and is in an on state in the downlink slot and/or the downlink symbol; and
the radio frequency module is in an on state in the uplink slot and/or the uplink symbol, is in an on state in the downlink slot and/or the downlink symbol, and is in an off state or a sleeping state in an unavailable slot.

12. The method according to claim 10, wherein the node reserves context of the MT module and context of the radio frequency module in the fully-off state;
wherein the context of the MT module comprises at least one of the following:
a physical channel configuration between the MT module and a base station, wherein the physical channel configuration is used to transmit signaling used to control the radio frequency module, and the physical channel configuration comprises a physical downlink control channel, PDCCH, format and a physical resource;
a wireless network temporary identity, RNTI, that matches a PDCCH, wherein the PDCCH is used to transmit signaling used to control the radio frequency module;
uplink/downlink forwarding power or an amplification multiple for controlling the radio frequency module; and
a related parameter for controlling beam receiving/transmitting between the radio frequency module and UE;
and/or
the context of the radio frequency module comprises at least one of the following:
maximum uplink forwarding power or an amplification multiple;
configuration of a synchronization signal block, SSB, parameter;
configuration of a channel state information-reference signal, CSI-RS, parameter;
configuration of a beam parameter broadcast and forwarded by using a system signal;
configuration of power broadcast and forwarded by using a system signal;
configuration of a parameter forwarded by using a physical random access channel, PRACH;
configuration of an uplink/downlink slot or symbol; and
configuration of a parameter related to the partially-on state.

13. A communications device, comprising a processor, a memory, and a program or an instruction that is stored in the memory and that can be run on the processor, when a program or an instruction is executed by a processor, steps of the node state control method according to any one of claims 1 to 8 are implemented., or when a program or an instruction is executed by a processor, steps of the node state control method according to any one of claims 9 to 12 are implemented.

## Patentansprüche

1. Knoten-Zustandssteuerungsverfahren, umfassend:
Erhalten (201), durch einen Knoten, von Zielinformationen, wobei der Knoten ein Mobile-Termination-Modul, MT-Modul, und ein Funkfrequenzmodul umfasst und die Zielinformationen verwendet werden, um einen Zielzustand des Knotens anzugeben; und
Umschalten (202), durch den Knoten, auf den Zielzustand basierend auf den Zielinformationen, wobei der Zielzustand mindestens einen von einem Zustand des MT-Moduls und einem Zustand des Funkfrequenzmoduls umfasst,
wobei der Zielzustand einen diskontinuierlichen Arbeitszustand umfasst,
**dadurch gekennzeichnet, dass** der diskontinuierliche Arbeitszustand Folgendes umfasst: das MT-Modul befindet sich in einem DRX-Zustand, und das Funkfrequenzmodul befindet sich in einem diskontinuierlichen Arbeitszustand, wobei der diskontinuierliche Arbeitszustand des Funkfrequenzmoduls mindestens einen von einem diskontinuierlichen Arbeitszustand für Uplink-Weiterleitung und einem diskontinuierlichen Arbeitszustand für Downlink-Weiterleitung umfasst, und der diskontinuierliche Arbeitszustand des Funkfrequenzmoduls basierend auf einer von einer netzseitigen Vorrichtung gesendeten Slot-Bitmap oder Symbol-Bitmap konfiguriert ist.

2. Verfahren nach Anspruch 1, wobei der Zielzustand ferner einen vollständig eingeschalteten Zustand, einen vollständig ausgeschalteten Zustand, einen teilweise eingeschalteten Zustand oder einen Teilarbeitszustand umfasst.

3. Verfahren nach Anspruch 2, wobei der vollständig ausgeschaltete Zustand einen der folgenden Zustände umfasst:
das MT-Modul befindet sich in einem Leerlaufzustand, und das Funkfrequenzmodul befindet sich in einem Aus-Zustand;
das MT-Modul befindet sich in einem inaktiven Zustand, und das Funkfrequenzmodul befindet sich in einem Aus-Zustand; und
das MT-Modul befindet sich in einem inaktiven Zustand, und das Funkfrequenzmodul befindet sich in einem inaktiven Zustand;
oder
wobei der teilweise eingeschaltete Zustand einen der folgenden Zustände umfasst:
das MT-Modul befindet sich in einem Ein-Zustand, und das Funkfrequenzmodul befindet sich in einem Aus-Zustand oder einem Ruhezustand;
das MT-Modul befindet sich in einem Discontinuous-Reception-Zustand, DRX-Zustand, und das Funkfrequenzmodul befindet sich in einem Aus-Zustand oder einem Ruhezustand; und
das MT-Modul befindet sich in einem leichten Ruhezustand, und das Funkfrequenzmodul befindet sich in einem Aus-Zustand;
oder
wobei der Teilarbeitszustand einen der folgenden Zustände umfasst:
das Funkfrequenzmodul befindet sich in einem Ein-Zustand in einem Uplink-Slot und/oder einem Uplink-Symbol und befindet sich in einem Aus-Zustand oder einem Ruhezustand in einem Downlink-Slot und/oder einem Downlink-Symbol;
das Funkfrequenzmodul befindet sich in einem Aus-Zustand oder einem Ruhezustand in dem Uplink-Slot und/oder dem Uplink-Symbol und befindet sich in einem Ein-Zustand in dem Downlink-Slot und/oder dem Downlink-Symbol; und
das Funkfrequenzmodul befindet sich in einem Ein-Zustand in dem Uplink-Slot und/oder dem Uplink-Symbol, befindet sich in einem Ein-Zustand in dem Downlink-Slot und/oder dem Downlink-Symbol und befindet sich in einem Aus-Zustand oder einem Ruhezustand in einem nicht verfügbaren Slot.

4. Verfahren nach Anspruch 1, wobei das Umschalten (202), durch den Knoten, auf den Zielzustand basierend auf den Zielinformationen umfasst:
in einem Fall, in dem der Knoten in einem ersten voreingestellten Zeitraum nicht für eine Weiterleitung eingeplant ist, Umschalten, durch den Knoten, auf einen der folgenden Zustände basierend auf den Zielinformationen:
das MT-Modul befindet sich in einem Ein-Zustand, und das Funkfrequenzmodul befindet sich in einem Aus-Zustand oder einem Ruhezustand; und
das MT-Modul befindet sich in einem DRX-Zustand, und das Funkfrequenzmodul befindet sich in einem Aus-Zustand oder einem Ruhezustand.

5. Verfahren nach Anspruch 4, wobei nach dem Umschalten (202), durch den Knoten, auf den Zielzustand basierend auf den Zielinformationen das Verfahren ferner umfasst:
in einem Fall, in dem der Knoten in einem zweiten voreingestellten Zeitraum nicht für eine Weiterleitung eingeplant ist, Umschalten, durch den Knoten, auf den folgenden Zustand basierend auf den Zielinformationen:
das MT-Modul befindet sich in einem leichten Ruhezustand, und das Funkfrequenzmodul befindet sich in einem Aus-Zustand.

6. Verfahren nach Anspruch 1, wobei das Umschalten (202), durch den Knoten, auf den Zielzustand basierend auf den Zielinformationen umfasst:
in einem Fall, in dem sich der Knoten in einem teilweise eingeschalteten Zustand befindet und der Knoten für eine Weiterleitung eingeplant ist, Umschalten, durch den Knoten, auf den folgenden Zustand basierend auf den Zielinformationen:
das MT-Modul befindet sich in einem Ein-Zustand, und das Funkfrequenzmodul befindet sich in einem Ein-Zustand;
oder
das Funkfrequenzmodul befindet sich in einem Ein-Zustand in einem Uplink-Slot und/oder einem Uplink-Symbol und befindet sich in einem Aus-Zustand oder einem Ruhezustand in einem Downlink-Slot und/oder einem Downlink-Symbol;
oder
das Funkfrequenzmodul befindet sich in einem Aus-Zustand oder einem Ruhezustand in dem Uplink-Slot und/oder dem Uplink-Symbol und befindet sich in einem Ein-Zustand in dem Downlink-Slot und/oder dem Downlink-Symbol;
oder
das Funkfrequenzmodul befindet sich in einem Ein-Zustand in dem Uplink-Slot und/oder dem Uplink-Symbol, befindet sich in einem Ein-Zustand in dem Downlink-Slot und/oder dem Downlink-Symbol und befindet sich in einem Aus-Zustand oder einem Ruhezustand in einem nicht verfügbaren Slot.

7. Verfahren nach Anspruch 2, wobei der Knoten in dem vollständig ausgeschalteten Zustand einen Kontext des MT-Moduls und einen Kontext des Funkfrequenzmoduls reserviert;
wobei der Kontext des MT-Moduls mindestens eines der Folgenden umfasst:
eine physikalische Kanalkonfiguration zwischen dem MT-Modul und einer Basisstation, wobei die physikalische Kanalkonfiguration verwendet wird, um eine Signalisierung zu übertragen, die verwendet wird, um das Funkfrequenzmodul zu steuern, und die physikalische Kanalkonfiguration ein Physical-Downlink-Control-Channel-Format, PDCCH-Format, und eine physikalische Ressource umfasst;
eine Wireless-Network-Temporary-Identity, RNTI, die zu einem PDCCH passt, wobei der PDCCH verwendet wird, um eine Signalisierung zu übertragen, die verwendet wird, um das Funkfrequenzmodul zu steuern;
Uplink-/Downlink-Weiterleitungsleistung oder einen Verstärkungsfaktor zum Steuern des Funkfrequenzmoduls; und
einen zugehörigen Parameter zum Steuern eines Strahlempfangs/-sendens zwischen dem Funkfrequenzmodul und UE;
und/oder
der Kontext des Funkfrequenzmoduls mindestens eines der Folgenden umfasst:
maximale Uplink-Weiterleitungsleistung oder einen Verstärkungsfaktor;
Konfiguration eines Synchronization-Signal-Block-Parameters, SSB-Parameters;
Konfiguration eines Channel-State-Information-Reference-Signal-Parameters, CSI-RS-Parameters;
Konfiguration eines Strahlparameters, der unter Verwendung eines Systemsignals gesendet und weitergeleitet wird;
Konfiguration von Leistung, die unter Verwendung eines Systemsignals gesendet und weitergeleitet wird;
Konfiguration eines Parameters, der unter Verwendung eines Physical-Random-Access-Channel, PRACH, weitergeleitet wird;
Konfiguration eines Uplink-/Downlink-Slots oder -Symbols; und
Konfiguration eines Parameters, der sich auf den teilweise eingeschalteten Zustand bezieht.

8. Verfahren nach Anspruch 1, wobei die Zielinformationen ein auf einer Inactive-Radio-Network-Temporary-Identifier, I-RNTI, basierendes Paging-Signal auf einer Radio-Access-Network-Seite, RAN-Seite, umfassen, das von einer netzseitigen Vorrichtung gesendet wird; und
das Umschalten (202), durch den Knoten, auf den Zielzustand basierend auf den Zielinformationen umfasst:
Herstellen, durch den Knoten, einer drahtlosen Verbindung zu der netzseitigen Vorrichtung; und
Umschalten, durch den Knoten, des Funkfrequenzmoduls in einen Ein-Zustand;
oder
wobei die Zielinformationen Informationen umfassen, die von einer netzseitigen Vorrichtung gesendet werden und die verwendet werden, um einen Umschaltzeitpunkt anzugeben; und
das Umschalten (202), durch den Knoten, auf den Zielzustand basierend auf den Zielinformationen umfasst:
in einem Fall, in dem eine aktuelle Zeit des Knotens der Umschaltzeitpunkt ist, Herstellen, durch den Knoten, einer drahtlosen Verbindung zu der netzseitigen Vorrichtung; und
Umschalten, durch den Knoten, des Funkfrequenzmoduls in einen Ein-Zustand.

9. Knoten-Zustandssteuerungsverfahren, umfassend:
Senden (301), durch eine netzseitige Vorrichtung, von Angabeinformationen, die verwendet werden, um einen Knoten anzuweisen, auf einen Zielzustand umzuschalten, wobei der Knoten ein Mobile-Termination-Modul, MT-Modul, und ein Funkfrequenzmodul umfasst und der Zielzustand mindestens einen von einem Zustand des MT-Moduls und einem Zustand des Funkfrequenzmoduls umfasst,
wobei der Zielzustand einen diskontinuierlichen Arbeitszustand umfasst,
**dadurch gekennzeichnet, dass** der diskontinuierliche Arbeitszustand Folgendes umfasst: das MT-Modul befindet sich in einem DRX-Zustand, und das Funkfrequenzmodul befindet sich in einem diskontinuierlichen Arbeitszustand, wobei der diskontinuierliche Arbeitszustand des Funkfrequenzmoduls mindestens einen von einem diskontinuierlichen Arbeitszustand für Uplink-Weiterleitung und einem diskontinuierlichen Arbeitszustand für Downlink-Weiterleitung umfasst, und der diskontinuierliche Arbeitszustand des Funkfrequenzmoduls basierend auf einer von einer netzseitigen Vorrichtung gesendeten Slot-Bitmap oder Symbol-Bitmap konfiguriert ist.

10. Verfahren nach Anspruch 9, wobei der Zielzustand ferner einen vollständig eingeschalteten Zustand, einen vollständig ausgeschalteten Zustand, einen teilweise eingeschalteten Zustand, einen Teilarbeitszustand oder einen diskontinuierlichen Arbeitszustand umfasst.

11. Verfahren nach Anspruch 10, wobei der vollständig ausgeschaltete Zustand einen der folgenden Zustände umfasst:
das MT-Modul befindet sich in einem Leerlaufzustand, und das Funkfrequenzmodul befindet sich in einem Aus-Zustand;
das MT-Modul befindet sich in einem inaktiven Zustand, und das Funkfrequenzmodul befindet sich in einem Aus-Zustand; und
das MT-Modul befindet sich in einem inaktiven Zustand, und das Funkfrequenzmodul befindet sich in einem inaktiven Zustand;
oder
wobei der teilweise eingeschaltete Zustand einen der folgenden Zustände umfasst:
das MT-Modul befindet sich in einem Ein-Zustand, und das Funkfrequenzmodul befindet sich in einem Aus-Zustand oder einem Ruhezustand;
das MT-Modul befindet sich in einem Discontinuous-Reception-Zustand, DRX-Zustand, und das Funkfrequenzmodul befindet sich in einem Aus-Zustand oder einem Ruhezustand; und
das MT-Modul befindet sich in einem leichten Ruhezustand, und das Funkfrequenzmodul befindet sich in einem Aus-Zustand;
oder
wobei der Teilarbeitszustand einen der folgenden Zustände umfasst:
das Funkfrequenzmodul befindet sich in einem Ein-Zustand in einem Uplink-Slot und/oder einem Uplink-Symbol und befindet sich in einem Aus-Zustand oder einem Ruhezustand in einem Downlink-Slot und/oder einem Downlink-Symbol;
das Funkfrequenzmodul befindet sich in einem Aus-Zustand oder einem Ruhezustand in dem Uplink-Slot und/oder dem Uplink-Symbol und befindet sich in einem Ein-Zustand in dem Downlink-Slot und/oder dem Downlink-Symbol; und
das Funkfrequenzmodul befindet sich in einem Ein-Zustand in dem Uplink-Slot und/oder dem Uplink-Symbol, befindet sich in einem Ein-Zustand in dem Downlink-Slot und/oder dem Downlink-Symbol und befindet sich in einem Aus-Zustand oder einem Ruhezustand in einem nicht verfügbaren Slot.

12. Verfahren nach Anspruch 10, wobei der Knoten in dem vollständig ausgeschalteten Zustand einen Kontext des MT-Moduls und einen Kontext des Funkfrequenzmoduls reserviert;
wobei der Kontext des MT-Moduls mindestens eines der Folgenden umfasst:
eine physikalische Kanalkonfiguration zwischen dem MT-Modul und einer Basisstation, wobei die physikalische Kanalkonfiguration verwendet wird, um eine Signalisierung zu übertragen, die verwendet wird, um das Funkfrequenzmodul zu steuern, und die physikalische Kanalkonfiguration ein Physical-Downlink-Control-Channel-Format, PDCCH-Format, und eine physikalische Ressource umfasst;
eine Wireless-Network-Temporary-Identity, RNTI, die zu einem PDCCH passt, wobei der PDCCH verwendet wird, um eine Signalisierung zu übertragen, die verwendet wird, um das Funkfrequenzmodul zu steuern;
Uplink-/Downlink-Weiterleitungsleistung oder einen Verstärkungsfaktor zum Steuern des Funkfrequenzmoduls; und
einen zugehörigen Parameter zum Steuern eines Strahlempfangs/-sendens zwischen dem Funkfrequenzmodul und UE;
und/oder
der Kontext des Funkfrequenzmoduls mindestens eines der Folgenden umfasst:
maximale Uplink-Weiterleitungsleistung oder einen Verstärkungsfaktor;
Konfiguration eines Synchronization-Signal-Block-Parameters, SSB-Parameters;
Konfiguration eines Channel-State-Information-Reference-Signal-Parameters, CSI-RS-Parameters;
Konfiguration eines Strahlparameters, der unter Verwendung eines Systemsignals gesendet und weitergeleitet wird;
Konfiguration von Leistung, die unter Verwendung eines Systemsignals gesendet und weitergeleitet wird;
Konfiguration eines Parameters, der unter Verwendung eines Physical-Random-Access-Channel, PRACH, weitergeleitet wird;
Konfiguration eines Uplink-/Downlink-Slots oder -Symbols; und
Konfiguration eines Parameters, der sich auf den teilweise eingeschalteten Zustand bezieht.

13. Kommunikationsvorrichtung, umfassend einen Prozessor, einen Speicher und ein Programm oder eine Anweisung, das/die in dem Speicher gespeichert ist und auf dem Prozessor ausgeführt werden kann, wobei, wenn das Programm oder die Anweisung durch einen Prozessor ausgeführt wird, Schritte des Knoten-Zustandssteuerungsverfahrens nach einem der Ansprüche 1 bis 8 implementiert werden, oder, wenn das Programm oder die Anweisung durch einen Prozessor ausgeführt wird, Schritte des Knoten-Zustandssteuerungsverfahrens nach einem der Ansprüche 9 bis 12 implementiert werden.

## Revendications

1. Procédé de commande de l'état d'un nœud comprenant les étapes consistant à :
obtenir (201), par un nœud, des informations cibles, dans lequel le nœud comprend un module de terminaison mobile, MT, et un module radiofréquence, et les informations cibles sont utilisées pour indiquer un état cible du nœud ; et
commuter (202), par le nœud, vers l'état cible sur la base des informations cibles, dans lequel l'état cible comprend au moins un état parmi un état du module MT et un état du module radiofréquence,
dans lequel l'état cible comprend un état de fonctionnement discontinu,
**caractérisé en ce que** l'état de fonctionnement discontinu comprend l'option suivante : le module MT est dans un état de DRX, et le module radiofréquence est dans un état de fonctionnement discontinu, dans lequel l'état de fonctionnement discontinu du module radiofréquence comprend au moins un état parmi un état de fonctionnement discontinu permettant un transfert en liaison montante et un état de fonctionnement discontinu permettant un transfert en liaison descendante, et l'état de fonctionnement discontinu du module radiofréquence est configuré sur la base d'une table binaire de créneaux ou d'une table binaire de symboles envoyée par un dispositif côté réseau.

2. Procédé selon la revendication 1, dans lequel l'état cible comprend en outre un état complètement activé, un état complètement désactivé, un état partiellement activé, ou un état de fonctionnement partiel.

3. Procédé selon la revendication 2, dans lequel l'état complètement désactivé comprend l'une des options suivantes :
le module MT est dans un état de repos, et le module radiofréquence est dans un état désactivé ;
le module MT est dans un état inactif, et le module radiofréquence est dans un état désactivé ; et
le module MT est dans un état inactif, et le module radiofréquence est dans un état inactif ;
ou
dans lequel l'état partiellement activé comprend l'une des options suivantes :
le module MT est dans un état activé, et le module radiofréquence est dans un état désactivé ou dans un état de sommeil ;
le module MT est dans un état de réception discontinue, DRX, et le module radiofréquence est dans un état désactivé ou dans un état de sommeil ; et
le module MT est dans un état de sommeil léger, et le module radiofréquence est dans un état désactivé ;
ou
dans lequel l'état de fonctionnement partiel comprend l'une des options suivantes :
le module radiofréquence est dans un état activé pendant un créneau de liaison montante et/ou un symbole de liaison montante, et est dans un état désactivé ou dans un état de sommeil dans un créneau de liaison descendante et/ou dans un symbole de liaison descendante ;
le module radiofréquence est dans un état désactivé ou dans un état de sommeil dans le créneau de liaison montante et/ou dans le symbole de liaison montante, et est dans un état activé dans le créneau de liaison descendante et/ou dans le symbole de liaison descendante ; et
le module radiofréquence est dans un état activé dans le créneau de liaison montante et/ou dans le symbole de liaison montante, est dans un état activé dans le créneau de liaison descendante et/ou dans le symbole de liaison descendante, et est dans un état désactivé ou dans un état de sommeil dans un créneau indisponible.

4. Procédé selon la revendication 1, dans lequel la commutation (202), par le nœud, vers l'état cible sur la base des informations cibles comprend l'opération suivante :
lorsque le nœud n'est pas planifié pour un transfert pendant une première période de temps prédéfinie, commuter, par le nœud, vers l'un des états suivants sur la base des informations cibles :
le module MT est dans un état activé, et le module radiofréquence est dans un état désactivé ou dans un état de sommeil ; et
le module MT est en état de DRX, et le module radiofréquence est dans un état désactivé ou dans un état de sommeil.

5. Procédé selon la revendication 4, dans lequel, après la commutation (202), par le nœud, vers l'état cible sur la base des informations cibles, le procédé comprend en outre l'opération suivante :
lorsque le nœud n'est pas planifié pour un transfert pendant une seconde période de temps prédéfinie, commuter, par le nœud, vers l'état suivant sur la base des informations cibles :
le module MT est dans un état de sommeil léger, et le module radiofréquence est dans un état désactivé.

6. Procédé selon la revendication 1, dans lequel la commutation (202), par le nœud, vers l'état cible sur la base des informations cibles comprend l'opération suivante :
lorsque le nœud est dans un état partiellement activé et que le nœud est planifié pour un transfert, commuter, par le nœud, vers l'état suivant sur la base des informations cibles :
le module MT est dans un état activé, et le module radiofréquence est dans un état activé ;
ou
le module radiofréquence est dans un état activé pendant un créneau de liaison montante et/ou un symbole de liaison montante, et est dans un état désactivé ou dans un état de sommeil dans un créneau de liaison descendante et/ou dans un symbole de liaison descendante ;
ou
le module radiofréquence est dans un état désactivé ou dans un état de sommeil dans le créneau de liaison montante et/ou dans le symbole de liaison montante, et est dans un état activé dans le créneau de liaison descendante et/ou dans le symbole de liaison descendante ;
ou
le module radiofréquence est dans un état activé dans le créneau de liaison montante et/ou dans le symbole de liaison montante, est dans un état activé dans le créneau de liaison descendante et/ou dans le symbole de liaison descendante, et est dans un état désactivé ou dans un état de sommeil dans un créneau indisponible.

7. Procédé selon la revendication 2, dans lequel le nœud réserve un contexte du module MT et un contexte du module radiofréquence dans l'état complètement désactivé ;
dans lequel le contexte du module MT comprend au moins l'un des éléments suivants :
une configuration de canal physique entre le module MT et une station de base, dans lequel la configuration de canal physique est utilisée pour transmettre une signalisation utilisée pour commander le module radiofréquence, et la configuration de canal physique comprend un format de canal physique de commande de liaison descendante, PDCCH, et une ressource physique ;
une identité temporaire de réseau sans fil, RNTI, qui correspond à un PDCCH, dans lequel le PDCCH est utilisé pour transmettre une signalisation utilisée pour commander le module radiofréquence ;
une puissance de transfert en liaison montante/liaison descendante ou un multiple d'amplification permettant de commander le module radiofréquence ; et
un paramètre connexe permettant de commander une réception/émission de faisceau entre le module radiofréquence et un UE ;
et/ou
le contexte du module radiofréquence comprend au moins l'un des éléments suivants :
une puissance maximale de transfert en liaison montante ou un multiple d'amplification ;
une configuration d'un paramètre de bloc de signaux de synchronisation, SSB ;
une configuration d'un paramètre de signal de référence d'informations d'état de canal, CSI-RS ;
une configuration d'un paramètre de faisceau diffusé et transféré à l'aide d'un signal de système ; une configuration d'une puissance diffusée et transférée à l'aide d'un signal de système ;
une configuration d'un paramètre transféré à l'aide d'un canal physique d'accès aléatoire, PRACH ;
une configuration d'un créneau ou d'un symbole de liaison montante/liaison descendante ; et
une configuration d'un paramètre associé à l'état partiellement activé.

8. Procédé selon la revendication 1, dans lequel les informations cibles comprennent un signal de radiorecherche sur la base d'un identifiant temporaire de réseau radio inactif, I-RNTI, sur un côté réseau d'accès radio, RAN, qui est envoyé par un dispositif côté réseau ; et
la commutation (202), par le nœud, vers l'état cible sur la base des informations cibles comprend en outre les étapes consistant à :
établir, par le nœud, une connexion sans fil au dispositif côté réseau ; et
commuter, par le nœud, le module radiofréquence vers un état activé ;
ou
dans lequel les informations cibles comprennent des informations qui sont envoyées par un dispositif côté réseau et qui sont utilisées pour indiquer un instant de commutation ; et
la commutation (202), par le nœud, vers l'état cible sur la base des informations cibles comprend en outre les étapes consistant à :
lorsque le temps actuel du nœud est l'instant de commutation, établir, par le nœud, une connexion sans fil au dispositif côté réseau ; et
commuter, par le nœud, le module radiofréquence vers un état activé.

9. Procédé de commande de l'état d'un nœud comprenant l'étape consistant à :
envoyer (301), par un dispositif côté réseau, des informations d'indication utilisées pour indiquer à un nœud de commuter vers un état cible, dans lequel le nœud comprend un module de terminaison mobile MT et un module radiofréquence, et l'état cible comprend au moins un état parmi un état du module MT et un état du module radiofréquence,
dans lequel l'état cible comprend un état de fonctionnement discontinu,
**caractérisé en ce que** l'état de fonctionnement discontinu comprend l'option suivante : le module MT est dans un état de DRX, et le module radiofréquence est dans un état de fonctionnement discontinu, dans lequel l'état de fonctionnement discontinu du module radiofréquence comprend au moins un état parmi un état de fonctionnement discontinu permettant un transfert en liaison montante et un état de fonctionnement discontinu permettant un transfert en liaison descendante, et l'état de fonctionnement discontinu du module radiofréquence est configuré sur la base d'une table binaire de créneaux ou d'une table binaire de symboles envoyée par un dispositif côté réseau.

10. Procédé selon la revendication 9, dans lequel l'état cible comprend en outre un état complètement activé, un état complètement désactivé, un état partiellement activé, ou un état de fonctionnement partiel, ou un état de fonctionnement discontinu.

11. Procédé selon la revendication 10, dans lequel l'état complètement désactivé comprend l'une des options suivantes :
le module MT est dans un état de repos, et le module radiofréquence est dans un état désactivé ;
le module MT est dans un état inactif, et le module radiofréquence est dans un état désactivé ; et
le module MT est dans un état inactif, et le module radiofréquence est dans un état inactif ;
ou
dans lequel l'état partiellement activé comprend l'une des options suivantes :
le module MT est dans un état activé, et le module radiofréquence est dans un état désactivé ou dans un état de sommeil ;
le module MT est dans un état de réception discontinue, DRX, et le module radiofréquence est dans un état désactivé ou dans un état de sommeil ; et
le module MT est dans un état de sommeil léger, et le module radiofréquence est dans un état désactivé ;
ou
dans lequel l'état de fonctionnement partiel comprend l'une des options suivantes :
le module radiofréquence est dans un état activé pendant un créneau de liaison montante et/ou un symbole de liaison montante, et est dans un état désactivé ou dans un état de sommeil dans un créneau de liaison descendante et/ou dans un symbole de liaison descendante ;
le module radiofréquence est dans un état désactivé ou dans un état de sommeil dans le créneau de liaison montante et/ou dans le symbole de liaison montante, et est dans un état activé dans le créneau de liaison descendante et/ou dans le symbole de liaison descendante ; et
le module radiofréquence est dans un état activé dans le créneau de liaison montante et/ou dans le symbole de liaison montante, est dans un état activé dans le créneau de liaison descendante et/ou dans le symbole de liaison descendante, et est dans un état désactivé ou dans un état de sommeil dans un créneau indisponible.

12. Procédé selon la revendication 10, dans lequel le nœud réserve un contexte du module MT et un contexte du module radiofréquence dans l'état complètement désactivé ;
dans lequel le contexte du module MT comprend au moins l'un des éléments suivants :
une configuration de canal physique entre le module MT et une station de base, dans lequel la configuration de canal physique est utilisée pour transmettre une signalisation utilisée pour commander le module radiofréquence, et la configuration de canal physique comprend un format de canal physique de commande de liaison descendante, PDCCH, et une ressource physique ;
une identité temporaire de réseau sans fil, RNTI, qui correspond à un PDCCH, dans lequel le PDCCH est utilisé pour transmettre une signalisation utilisée pour commander le module radiofréquence ;
une puissance de transfert en liaison montante/liaison descendante ou un multiple d'amplification permettant de commander le module radiofréquence ; et
un paramètre connexe permettant de commander une réception/émission de faisceau entre le module radiofréquence et un UE ;
et/ou
le contexte du module radiofréquence comprend au moins l'un des éléments suivants :
une puissance maximale de transfert en liaison montante ou un multiple d'amplification ;
une configuration d'un paramètre de bloc de signaux de synchronisation, SSB ;
une configuration d'un paramètre de signal de référence d'informations d'état de canal, CSI-RS ;
une configuration d'un paramètre de faisceau diffusé et transféré à l'aide d'un signal de système ;
une configuration d'une puissance diffusée et transférée à l'aide d'un signal de système ;
une configuration d'un paramètre transféré à l'aide d'un canal physique d'accès aléatoire, PRACH ;
une configuration d'un créneau ou d'un symbole de liaison montante/liaison descendante ; et
une configuration d'un paramètre associé à l'état partiellement activé.

13. Dispositif de communication, comprenant un processeur, une mémoire, et un programme ou une instruction qui est stocké dans la mémoire et qui peut être exécuté sur le processeur, lorsqu'un programme ou une instruction est exécuté par un processeur, des étapes du procédé de commande de l'état d'un nœud selon l'une quelconque des revendications 1 à 8 sont exécutées, ou lorsqu'un programme ou une instruction est exécuté par un processeur, des étapes du procédé de commande de l'état d'un nœud selon l'une quelconque des revendications 9 à 12 sont exécutées.
